# EUROPEAN PATENT APPLICATION

(11) **EP 0 918 412 A2**
(43) Date of publication of application: **26.05.1999**
(21) Application number: 98117380.0
(22) Date of filing: 14.09.1998
(51) Int. Cl.: H04L 12/24

(54) **Automatic discovery of networked devices**

(30) Priority: 21.11.1997 US 975776
(71) Applicant: Hewlett-Packard Company, Palo Alto, CA 94303 (US)
(72) Inventor: Gase, Stephen T., Boise, Idaho 83709 (US)
(74) Representative: Schoppe, Fritz, Dipl.-Ing.

(57) **Abstract**

A method and apparatus (10) which allows a network administrator to automatically populate a database (24) with more extensive information about devices (12) connected to the network, but at least with the hardware address of each device (12) on the network and enough information to communicate with the device (12) to obtain additional information if necessary. One embodiment of the invention provides several different methods or discovery agents (27) for identifying devices (12) on the network. The discovery events (27) or processes can be initiated automatically as a result of a triggering event, such as system start-up, or at specific scheduled times, or discovery events may be initiated manually by a user system administrator through a user interface (21) on the network. It also provides a modular framework to which new methods or expert agents can be added to provide better performance, more accurate results and/or lower network usage.

## Description

### FIELD OF THE INVENTION

This invention generally relates to detection and logging of networked devices. More particularly, this invention relates to an apparatus and method for discovering and logging networked devices automatically.

### BACKGROUND OF THE INVENTION

Computer networks have become a primary infrastructure in a large percentage of business, educational and governmental entities. Even relatively small computer networks can employ a large number of network devices. Oftentimes two or more small networks are linked together, using a protocol known as TCP/IP (Transmission Control Protocol/Internet Protocol), to form a larger internet. These smaller networks and larger internets can be linked to the Internet which is an international collection of internets that use the TCP/IP protocol.

Normally, every device within a TCP/IP based network is assigned a unique IP address which serves as its individual identifier. Considering the relatively large number of network devices which may be present on a given network and the dynamic nature of the network in terms of adding and subtracting devices to and from the network, physically relocated network devices on the network and logically grouping of the devices into local sub-nets, it is difficult at best to keep track of all of the IP addresses on the network and the network resources which those IP addresses are assigned. A network system administrator needs to track IP addresses and network resources in order to insure proper functioning of the network. The network administrator needs to insure that no two devices on the network use the same IP address, insure that all IP addresses attached to the network are within the valid range for the particular network or local subnet and that both hardware and software limitations are not being exceeded for both the network and the devices attached to the network.

U.S. Patent No. 5,337,309 to Robert Faulk, Jr., teaches a method and apparatus for collecting detailed information about the layout and topology of a computer network. The patented device and method detects and records which port of a multiport network device other network devices communicate with. These port numbers are stored in a table which is updated by monitoring packets received by the multiport network device. In addition to storing the port number, the patented device and method also store a source address of the network device from which the communication packet originated. This patent also teaches a recursive node discovery method for obtaining the port numbers and source addresses of the sending devices.

Unfortunately, the aforementioned device and method provide only a limited amount of information. Ideally, the system administrator of a network needs much more information about the network devices. This information may include IP addresses (internet protocol addresses) subnet masks; IP gateway addresses; security level assignment information; proxy server assignments; community names; device passwords; location descriptions; system contact; frame type selections; protocol stack selections; and even device behavior characteristics. It should be apparent that manually gathering this wealth of information for each and every network device is nearly impossible. Unfortunately, the aforementioned method and device may also take considerable time and it doesn't handle unconfigured devices, nor does it handle other protocol stacks (IPX, Open Internetwork Packet exchange, for example). Accordingly, there is a need for automatically collecting detailed information about the devices connected to a network.

### SUMMARY OF THE INVENTION

One embodiment of the present invention provides a method and apparatus which allows a network administrator to automatically populate a database with more extensive information about devices connected to the network, but at least with the hardware address of each device on the network and enough information to communicate with the device to obtain additional information if necessary. This embodiment of the invention provides several different methods or discovery agents for identifying devices on the network. The discovery events or processes can be initiated automatically as a result of a triggering event, such as system start-up, or at specific scheduled times, or discovery events may be initiated manually by a user or system administrator through a user interface on the network. It also provides a modular framework to which new methods or expert agents can be added to provide better performance, more accurate results and/or lower network usage.

Normally, the software aspect of the invention resides on a network server or workstation which is connected to the subject network. A full time local connection is desirable but not necessary. In general terms the software includes: 1) an interface; 2) a resolver; 3) a database; and 4) discovery agents. The interface provides a user, such as the system administrator, with a way of inputting and receiving information to and from the invention. The resolver is responsible for acquiring specific information from an identified network device. This information can then be stored in the database. The discovery agents are responsible for identifying network devices and communicating the network devices hardware and initial IP address settings to the resolver. These discovery agents, also referred to as address generating agents, can be integrated or separate and are used primarily to supply the resolver with an IP address and/or MAC address for network devices not already in the database. These agents can include a daemon which monitors the network for BOOTP (Bootstrap Protocol), DHCP (Dynamic Host Configuration Protocol) and/or similar broadcast packets. These agents can also include manually entering a hardware address/IP address, multicast packet monitoring, IPX packet monitoring and even proprietary network device notification schemes.

The invention can be implemented on a variety of network architectures, including ethernet and token ring architectures, employing a variety of network protocols, including TCP/IP (Transmission Control Protocol/Internet Protocol), IPX (Internetwork Packet Exchange), DLC (Data Link Control), and AppleTalk.

As mentioned earlier, there are three primary discovery initiating events which include system startup, system administrator initiated events and scheduled events. In one embodiment of the invention, a discovery daemon is started which checks to see if the database exists and, if it does, queries the database to see if it contains any data concerning the addresses of network devices. If the database does not exist or it is not populated, a discovery event will be initiated. In this case, only a broadcast discovery is undertaken. Broadcast discoveries, while not as thorough as other methods, quickly populate the database. In the case of user or system administrator initiated discoveries and scheduled discoveries, and in the event broadcast discovery methods have been disabled, the invention employs several other discovery methods.

The discovery methods or agents employed by the invention include BOOTP broadcasts, DHCP broadcasts, multicast advertisments, IPX SAP(Service Advertisement Protocol) broadcasts, IP broadcasts, IPX broadcasts, IP pings, ARP (Address Resolution Protocol) table searches, user address searches, user host file input and multicast solicitation. The invention includes broadcast support for servers and host devices having multiple local area network interfaces. Additionally, in the case of IP pings, the invention uses multiple threads to traverse a list of IP address ranges. Host files can be provided by the user to provide a list of host names, IP addresses, IPX addresses and/or MAC addresses. The ARP table discovery agent takes advantage of the fact that each IP capable device maintains an ARP table. These ARP tables list all of the network nodes that the original node is in communication with. The table includes the MAC address and IP address of each node. The invention recursively searches each node, querying that node for all other nodes of which it is aware. Additionally, the invention supports three levels of ARP table searching which include an unrestricted search, a local sub-net only search and a "local sub-net plus a designated number of hops away" search, where a "hop" is here defined as one device removed from the local subnet, that is to say that the device is referenced by a device on the local subnet.

### DESCRIPTION OF THE DRAWINGS

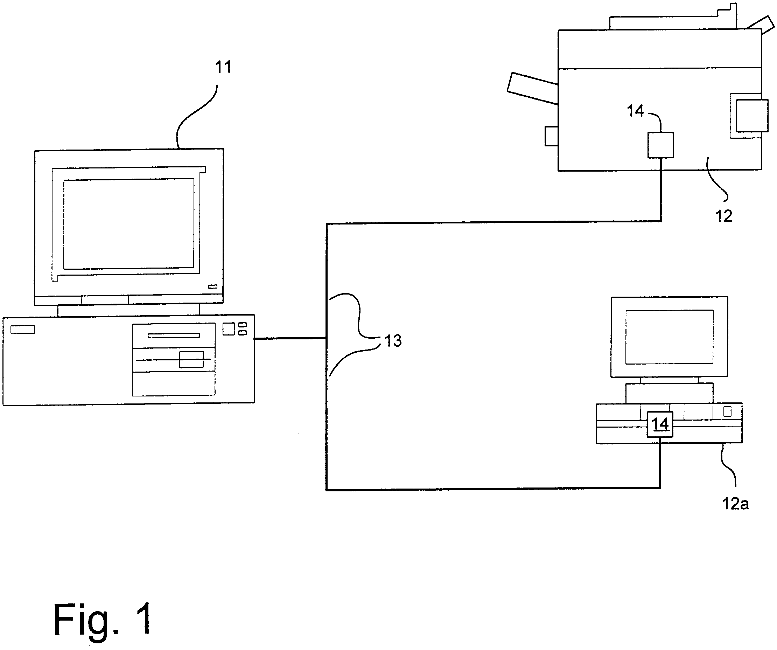

--Fig. 1 is a schematic representation of a network on which one embodiment of the invention may be implemented;

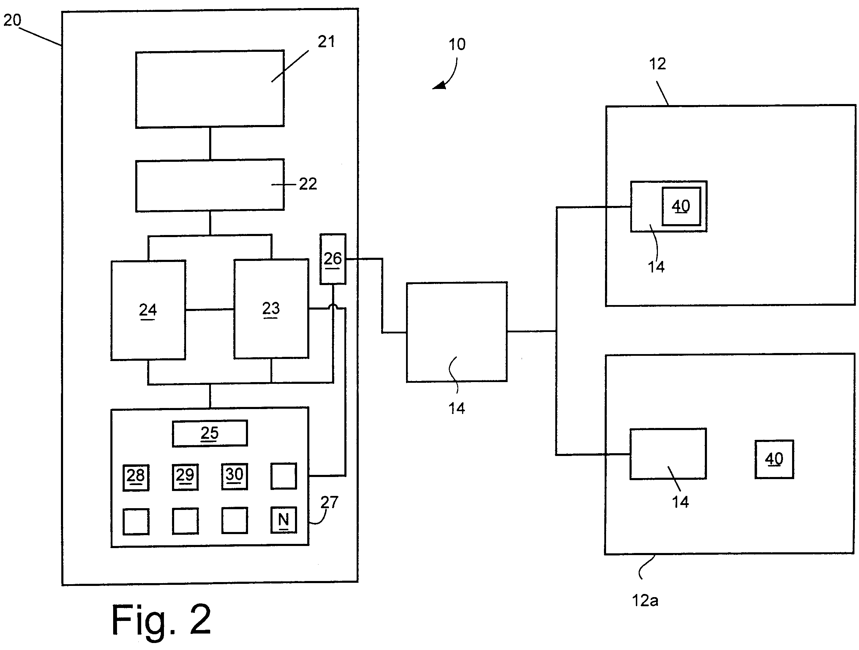

Fig. 2 is a block diagram of the software aspect of one embodiment of the invention;
Fig. 3 is a schematic representation of a nondescript network architecture on which the invention can be implemented;
Fig. 4 is a flow diagram illustrating the software aspect of one embodiment of the invention which demonstrates the modularity feature of the software;
Fig. 5 is a pseudo-code listing for an algorithm for unlimited ARP table searching;
Fig. 6 is a pseudo-code listing for an algorithm for local subnet only ARP table searching; and
Fig. 7 is a pseudo-code listing for an algorithm for local subnet plus one hop ARP table searching.--

### DETAILED DESCRIPTION OF THE INVENTION

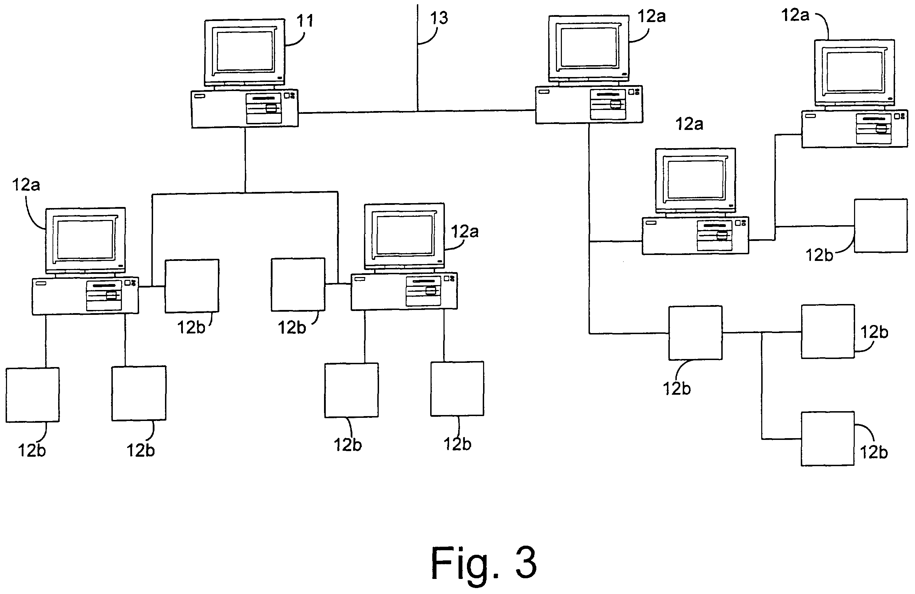

Referring now to the figures one embodiment of a system, software application and method for automatic discovery of networked devices is described in detail. The system is generally designated in Fig. 3 at 10 and includes a host device 11, such as a personal computer or workstation, and two or more network devices 12, such as other computers or printers, which in this embodiment include network interface cards 14 such as Hewlett Packard® JetDirect® network cards, connected by a communications link such as cabling 13. Software 20 according to the invention is installed on host device 11 and may include an interface 21, an interface translator 22, a resolver 23, a database 24, a discovery daemon 25, various discovery agents 27 and a SNMP (Simple Network Management Protocol) translator 26 which communicates with the other network devices via the network.

Interface 21 provides a user, such as the system administrator, with a way of inputting and receiving information to and from resolver 23 and database 24. Here, interface 21 is a web page interface which is displayed on the display screen of host 11. Interface 21 is in this embodiment created by interface translator 21 which displays a graphic user interface using HTML (Hyper Text Markup Language) and CGI (Computer Graphics Interface) compliant code. Interface 21 both displays network device information such as the available devices and their existing settings and parameters, and may even allow a user to change the settings and parameters and initiate reconfiguration sequences.

Resolver 23 is responsible for acquiring specific information from an identified network device such as those shown at 12. This information can include details like the currently assigned IP address, the port number, the hardware address, the IP hostname, the IPX name, the device model, the IP gateway, a device description, a system contact, a device password, and device specific behavior characteristics. All or portions of the information returned by resolver 23 are normally stored in database 24. Database 24 can be as simple as a single flat file database stored on host 11 or it can be more complex such as a relational database which might include reference lookup tables containing additional information about different devices which are likely to be attached to the network. Additionally, resolver 23 can interrogate a network device to discover if that particular device is aware of any other network devices which may not be in database 24. In this way, resolver 23 also becomes a discovery agent for locating additional network devices.

Discovery daemon 25 is launched at system startup and is responsible for initiating initial discovery agents as well as monitoring the network for BOOTP, multicast advertisements, IPX SAP broadcasts and DHCP packet transmissions announcing new network devices.

Integrated or separate discovery agents 27, also referred to as address generating agents, are used to supply resolver 23 with an IP address and/or MAC address for network devices 12 not already in database 24. Agents 27 can include a daemon which monitors the network for BOOTP (Bootstrap Protocol), DHCP (Dynamic Host Configuration Protocol), multicast advertisements, IPX SAP broadcasts and/or similar broadcast packets. These agents can also include manually entering a hardware address/IP address, multicast packet monitoring, multicast solicitation, IPX packet monitoring and even proprietary network device notification schemes.

Fig. 3 shows a nondescript network architecture which is intended to illustrate the inventions immunity towards the position or hierarchy of other devices within a network. Host device 11 simply provides a residence for the software and the necessary hardware to carry out the software's instructions. Other network devices can include multi-functional devices such as secondary hosts 12a and single function devices such as printers, communication gateways, and the like, designated at 12b. Their relative positioning within the subject network is of little concern.

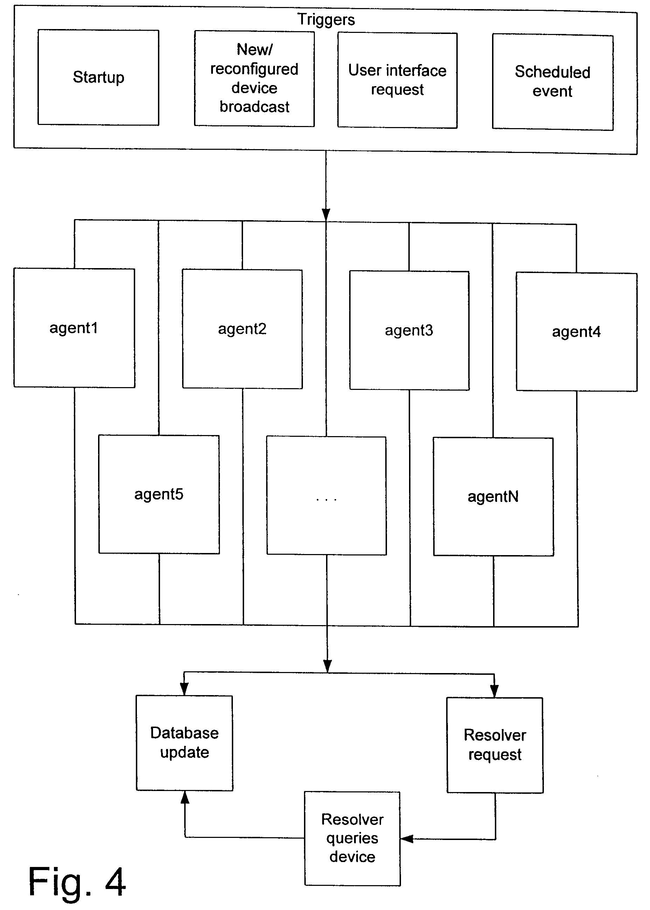

A general discovery method employed by one embodiment of the invention is illustrated in Fig. 4. Beginning with the box near the top of Fig. 4, one or more discovery agents are triggered into action by one of three general events: system startup; a new or reconfigured device broadcast reception, user interface request; or a scheduled event.

At startup, discovery daemon 25 is launched at system startup. Discovery daemon 25 first checks for the existence of database 24. If it finds database 24, it queries the database to check for device entries. If discovery daemon 25 doesn't find database 24 or the database is not populated, discovery daemon 25 will launch one or more discovery agents 27 to populate database 24. In this embodiment, the system default settings dictate that discovery daemon 25 launches only broadcast discovery agents such as IP agent 28, IPX agent 29, and/or DHCP agent 30. However, a system administrator or user can override these default settings and select one or more different discovery agents. After initial discovery is complete, if necessary, discovery daemon 25 enters a monitoring mode in which it listens to the network for announcements, such as BOOTP, and DHCP broadcasts, by newly connected or reconfigured network devices.

In addition to startup and new/reconfigured device broadcast triggers, a request from user interface 21 can trigger a discovery request. This request can be discovery agent specific such as requesting IP agent 28 to service an IP address search request by the user, comprehensive using all available discovery agents to service an exhaustive resource discovery request by the user, or some combination of the two. Additionally, a scheduler daemon is also launched at startup and will request discovery events at scheduled times such as every night at midnight to periodically update database 24. The frequency and time for the scheduled discovery requests are tailorable by the system administrator or user.

As is shown in Fig. 4 multiple discovery agent threads, as well as multiple threads of one or more discovery agents can be processed at the same time. The various discovery agents return newly discovered hardware and IP addresses to both database 24, where they are logged and to resolver 23. Resolver 23 queries the new network device for any additional information desired either by database 24 or the system administrator/user.

The discovery engine can be used to resolve an address for a user request as well. Here, interface 21 passes the address in question to resolver 23 which returns all of the information that can be obtained from the device at that particular address.

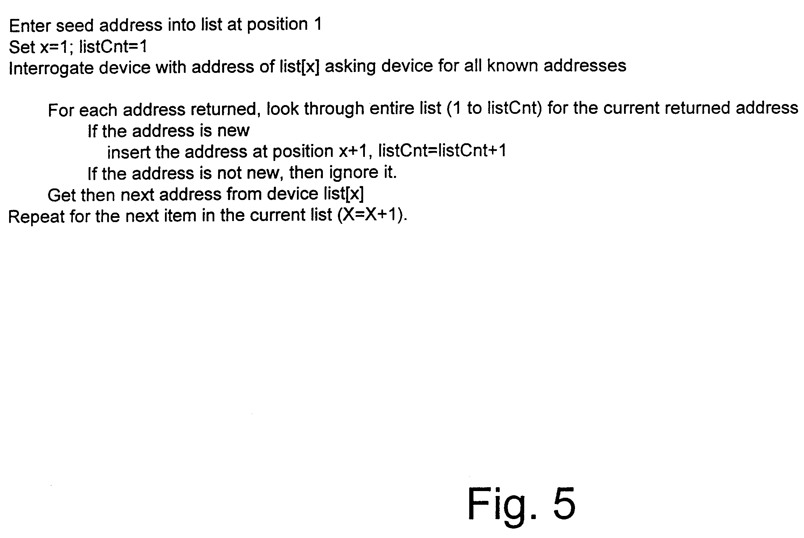

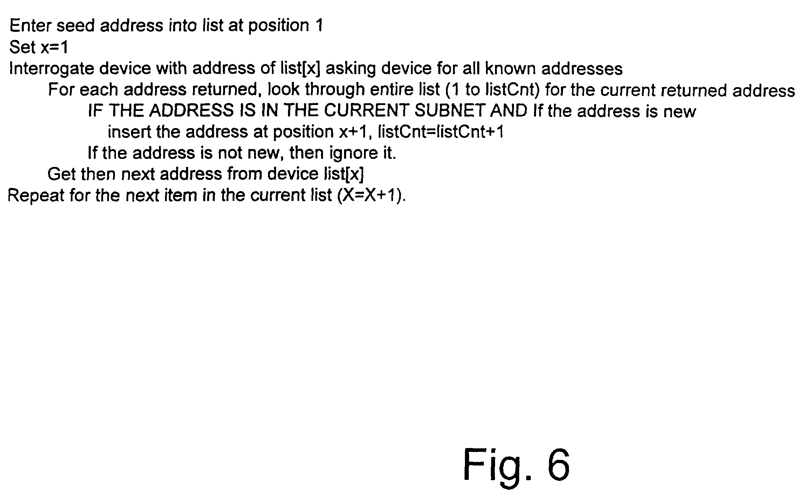

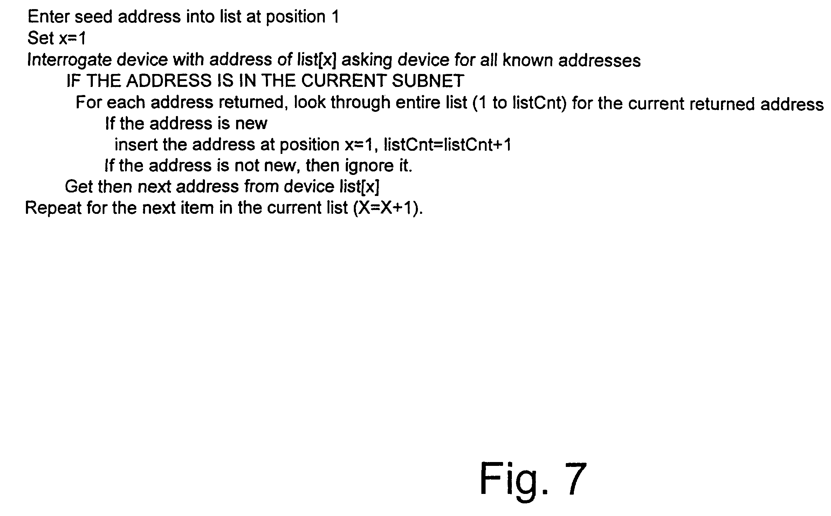

For purposes of understanding the code listing in Figs. 5 through 7, the seed address is defined as the initial device address that has support for SNMP and has an ARP table that can be read in order to get started. Additionally, the differences between the algorithms are empasized in capitalized text. Fig. 5 is a psuedocode listing of the algorithm for implementing an unlimited, at least within the network firewall, recursive ARP table search. Fig. 6 is a psuedocode listing of the algorithm for implementing a subnet limited recursive ARP table search. Fig. 7 is a psuedocode listing of the algorithm for implementing a subnet plus one hop limited recursive ARP table search.

## Claims

1. A method for populating a network resource database (24) on a host device (11) comprising the acts of:
querying the database (24) for an entry;
if an entry does not exist, launching a discovery agent (27) across an attached computer network employing a broadcast protocol to return addresses of network devices (12) attached to the network;
resolving the returned addresses into more detailed information about devices (12) located at the returned addresses; and
storing at least a portion of the information in the database (24).

2. The method of claim 1 wherein the act of launching a discovery agent (27) includes monitoring the network for broadcasts selected from the group of broadcasts including BOOTP, DHCP, multicast advertisments and IPX SAP.

3. The method of claim 2 further comprising the act of launching a discovery agent (27) selected from the group of discovery agents (27) including an IP agent (28), an IPX agent (29), a DHCP agent (30) and an ARP table search agent.

4. The method of claim 1 further comprising the act of launching a discovery agent (27) selected from the group of discovery agents (27) including an IP agent (28), an IPX agent (29), a DHCP agent (30) and an ARP table search agent.

5. The method of claims 1, 2, 3 or 4 wherein a discovery agent (27) is launched as a result of a system startup event.

6. The method of claims 1, 2, 3 or 4 wherein a discovery agent (27) is launched as a result of a user request.

7. The method of claims 1, 2, 3 or 4 wherein a discovery agent (27) is launched as a result of a scheduler daemon.
